# EUROPEAN PATENT APPLICATION

(11) **EP 4 671 881 A1**
(43) Date of publication of application: **31.12.2025**
(21) Application number: 25180729.3
(22) Date of filing: 04.06.2025
(51) Int. Cl.: G05B 13/02, H03G 3/00, H03G 3/20, H04L 27/08

(54) **DELTA DETECTOR UNIT AND AUTOMATIC CONTROL SYSTEM COMPRISING A DELTA DETECTOR UNIT**

(30) Priority: 25.06.2024 DE 102024117889
(71) Applicant: Harman Becker Automotive Systems GmbH, 76307 Karlsbad (DE)
(72) Inventor: TRAVAGLINI, Alessandro, 76307 Karlsbad (DE); CONRADI GARCIA -BAQUERO, Miguel Àngel, 76307 Karlsbad (DE)
(74) Representative: Westphal, Mussgnug & Partner, Patentanwälte mbB

(57) **Abstract**

A delta detector unit is configured to determine an average value of a signal parameter of an input signal of an automatic control system within a first time interval, determine an average value of the signal parameter of the input signal within a second time interval, determine a difference between the average value of the signal parameter within the first time interval, and the average value of the signal parameter within the second time interval, and, if the determined difference exceeds a defined first threshold or falls below a defined second threshold, instruct the automatic control system to adapt at least one parameter of a control algorithm of the automatic control system.

## Description

### TECHNICAL FIELD

The disclosure relates to a delta detector unit and to an automatic control system comprising a delta detector unit.

### BACKGROUND

Automatic control systems are generally able to control at least one parameter of an input signal such that at least one parameter of a resulting output signal equals a desired value or falls within a desired range of values. Such automatic control systems may be implemented as feedback or feedforward control systems. The purpose of such systems is to ensure that certain signal parameters of an output signal remain constant, irrespective of changes in the signal parameter of the input signal. An automatic control system generally monitors either the output signal (feedback system) or the input signal (feedforward system), and uses a control algorithm to adjust the respective parameter(s) to maintain a desired value or a desired range of values. Certain parameters of such control algorithms (e.g., attack time and release time) are preset and will then be used by the control algorithm in the following. Such parameters are generally set to produce the best possible results. There is a need for an automatic control system that produces better results than known systems.

### SUMMARY

A delta detector unit is configured to determine an average value of a signal parameter of an input signal of an automatic control system within a first time interval, determine an average value of the signal parameter of the input signal within a second time interval, determine a difference between the average value of the signal parameter within the first time interval, and the average value of the signal parameter within the second time interval, and, if the determined difference exceeds a defined first threshold or falls below a defined second threshold, instruct the automatic control system to adapt at least one parameter of a control algorithm of the automatic control system.

An automatic control system includes the delta detector unit, and a control unit, the control unit including an adjustment unit configured to adjust a signal parameter of the input signal depending on a correction signal to obtain an output signal, a detector unit configured to determine the respective signal parameter of the input signal or of the output signal, and a processing unit configured to carry out a control algorithm, and, by means of the control algorithm and based on a current value of the respective signal parameter of the input signal or the output signal, determine the correction signal such that the respective signal value of the output signal matches a desired value or falls within a desired range of values.

A method includes determining an average value of a signal parameter of an input signal of an automatic control system within a first time interval, determining an average value of the signal parameter of the input signal within a second time interval, determining a difference between the average value of the signal parameter within the first time interval, and the average value of the signal parameter within the second time interval, and if the determined difference exceeds a defined first threshold or falls below a defined second threshold, instructing the automatic control system to adapt at least one parameter of a control algorithm of the automatic control system.

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The arrangements may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates an automatic control system of a feedback type according to embodiments of the disclosure.
Figure 2 schematically illustrates an automatic control system of a feedforward type according to embodiments of the disclosure.
Figure 3 schematically illustrates a change of a parameter of an input signal over time.
Figure 4 schematically illustrates the course of a difference (delta) over time as determined by means of a delta detector unit according to embodiments of the disclosure.
Figure 5, in a flow chart, schematically illustrates a method according to embodiments of the disclosure.

### DETAILED DESCRIPTION

As required, detailed embodiments of the present invention are disclosed herein; however, it is to be understood that the disclosed embodiments are merely examples of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It is recognized that directional terms that may be noted herein (e.g., "upper", "lower", "inner", "outer", "top", "bottom", etc.) simply refer to the orientation of various components of an arrangement as illustrated in the accompanying figures. Such terms are provided for context and understanding of the disclosed embodiments.

Automatic control systems are employed in a variety of applications to control a signal parameter of an input signal. For example, automatic gain control systems may be used to adjust the amplitude of an incoming analog signal in a way such that the resulting output signal has an essentially constant amplitude, irrespective of the amplitude of the input signal. That is, an automatic gain control system is a system capable of maintaining an output signal amplitude irrespective of a variation in an input signal amplitude. Another example of an automatic control system is an automatic power control system, which maintains an output signal power irrespective of a variation in an input signal power.

Automatic gain control systems are often used in radio transceivers, for example, in order to output a signal having an essentially constant volume, irrespective of differences in the signal strength of the received radio signals. In the following, the general principles of the delta detector unit and the automatic control system according to embodiments of the disclosure will be described with respect to automatic gain control (AGC) systems. It is noted, however, that this is just one example of an automatic control system. Generally, any parameter of an input signal may be adjusted in order to keep the respective parameter in the output signal essentially constant. The principles that will be described with respect to AGC systems in the following, similarly apply to any other kind of automatic control system. Different types of applications in which automatic control systems may be used in comprise but are not restricted to, e.g., automatic valves, optical receivers, analogue control systems, digital system applications, and metering-pump-speed control systems.

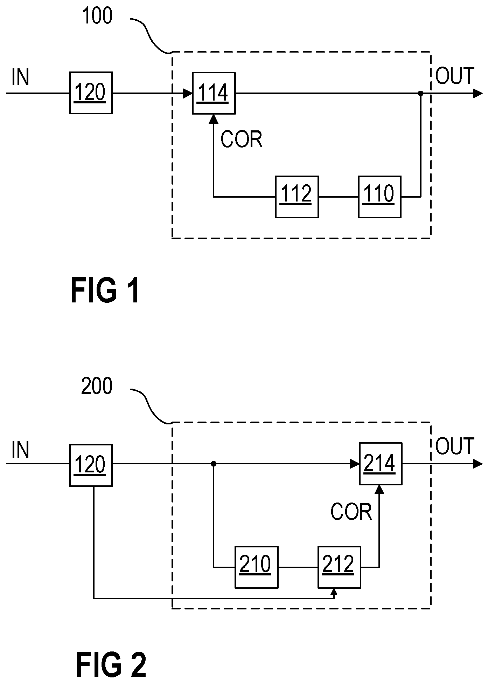

Referring to Figure 1, an automatic control system of a feedback type is schematically illustrated. The automatic control system comprises a control unit 100, the control unit 100 comprising an adjustment unit 114, a detector unit 110, and a processing unit 112. The adjustment unit 114 is configured to adjust a signal parameter of an input signal IN depending on a correction signal COR to obtain an output signal OUT. The detector unit 110 is configured to determine the respective signal parameter of the output signal OUT, and the processing unit 112 is configured to carry out a control algorithm, and, by means of the control algorithm and based on a current value of the respective signal parameter of the output signal OUT, determine the correction signal COR such that the respective signal value of the output signal OUT matches a desired value or falls within a desired range of values. The adjustment unit 114 may be or may comprise a multiplier configured to multiply the input signal IN with the correction signal COR, for example.

The automatic control system of Figure 1 is a closed-loop feedback regulating circuit. For example, the average or peak output signal level may be used to dynamically adjust a gain of the input signal IN. Such automatic gain control systems of the feedback type are often used, e.g., in radio receivers, in order to equalize the average volume (e.g., loudness) of different radio stations due to differences in received signal strength, as well as variations in a single radio station's radio signal due to, e.g., fading. Without automatic gain control, the sound emitted from a radio receiver would vary to an extreme extent from a weak to a strong signal. The automatic gain control system reduces the volume of the input signal IN if the input signal IN is strong, and raises it when it is weak.

Referring to Figure 2, an automatic control system of a feedforward type is schematically illustrated. The automatic control system comprises a control unit 200, the control unit 200 comprising an adjustment unit 214, a detector unit 210, and a processing unit 212. The adjustment unit 214 is configured to adjust a signal parameter of an input signal IN depending on a correction signal COR to obtain an output signal OUT. The detector unit 210 is configured to determine the respective signal parameter of the input signal IN, and the processing unit 212 is configured to carry out a control algorithm, and, by means of the control algorithm and based on a current value of the respective signal parameter of the input signal IN, determine the correction signal COR such that the respective signal value of the output signal OUT matches a desired value or falls within a desired range of values.

Main parameters of a control algorithm of an automatic control system are generally attack time, release time, and detection threshold. The attack time generally defines how long it takes for the automatic control system to start acting (i.e. to start adjusting the respective parameter of the input signal IN) after detecting that the respective parameter is above a defined threshold. The release time defines how long it takes for the automatic control system to return to its normal state after detecting that the respective parameter is below a defined threshold. The detection threshold generally defines a minimum deviation from a desired value for the automatic control system to begin acting. Further parameters of a control algorithm include but are not restricted to release hysteresis (amount of signal level decrease past the target level that forces the automatic control system to increase gain and start a release), and attack hysteresis (amount of signal level increase past the target level that forces the automatic gain control to decrease gain and start an attack).

In many applications, automatic gain control systems are designed such that the level of the respective signal parameter does not change abruptly (too quickly) in order to not create any audible artifacts. In other words, an automatic gain control system typically changes the level of a given parameter (e.g., volume) in order to achieve a defined target level so that, after a certain time, the level statistically remains the same. However, if the automatic gain control system does not react fast enough to changes in the input signal IN, audio levels may not be synchronously adapted. For example, the volume of a first song may get boosted and, when a second song is reproduced immediately after, the first portion of the second song may be reproduced at a very loud volume until the volume of the second song has been adjusted to the target volume. One way of overcoming this problem is to tune the control algorithm to always be very reactive. This, however, may lead to a highly unpleasant over-compressed output signal OUT. Further, it is even possible that the artistic intent of the input signal is degraded. This may result in a highly unpleasant listening experience. A further constraint is that automatic control systems are generally expected in real-time domain. This requires keeping a look-ahead buffer to a minimum size, which only allows for an analysis of a very short portion of the input or output signal IN, OUT. An automatic control system, therefore, may operate without gathering information from the entire signal, due to normal latency constraints.

The automatic control systems according to embodiments disclosed herein, allow to dynamically adapt their behavior from, e.g., a slow "steady" levelling to a faster and more "reactive" levelling, based on the level of the input signal. In addition to a control unit 100, 200, as described with respect to Figures 1 and 2 above, the automatic control system further comprises a delta detector unit 120. The delta detector unit 120 is configured to determine an average value of the respective signal parameter (i.e. the signal parameter of the input signal IN that is to be adjusted by means of the adjustment unit 114, 214) of the input signal IN within a first time interval, determine an average value of the signal parameter of the input signal IN within a second time interval, determine a difference between the average value of the signal parameter within the first time interval, and the average value of the signal parameter within the second time interval, and, if the determined difference exceeds a defined threshold or falls below a defined threshold, instruct the adjustment unit 112, 212 to adapt at least one parameter of the control algorithm.

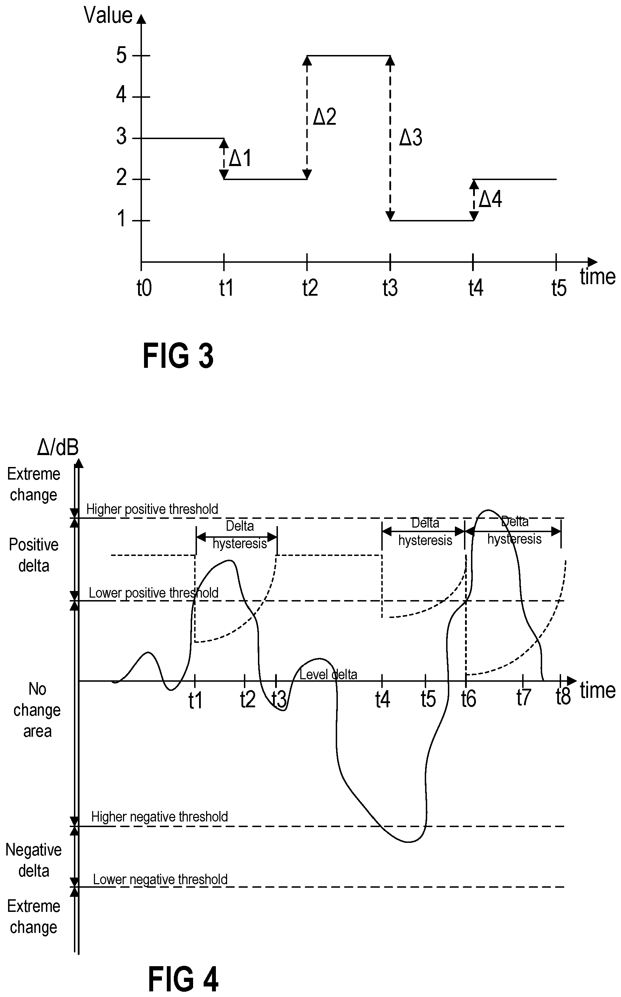

Referring to Figure 3, averages of a signal value (e.g., volume) in different time intervals t0 - t1, t1 - t2, t2 - t3, t3 - t4, t4 - t5 are schematically illustrated. A difference between the average of the signal value within a first time interval t0 - t1 and the average of the signal value within a second time interval t1 - t2 is indicated as Δ1. The difference Δ1 (positive delta) is comparably small and may be below the defined threshold. Therefore, no adjustments of control algorithm parameters are initiated. A difference between the average of the signal value within the second time interval t1 - t2 and the average of the signal value within a third time interval t2 - t3 is indicated as Δ2. This difference Δ2 (negative delta) is comparably large and may fall below the defined threshold. Therefore, adjustments of control algorithm parameters may be initiated. The same applies for the difference Δ3 (positive delta) between the average of the signal value within the third time interval t2 - t3 and the average of the signal value within a fourth time interval t3 - t4, which is comparably large such that it exceeds the defined threshold. In the example illustrated in Figure 3, the difference Δ4 (negative delta) between the average of the signal value within the fourth time interval t3 - t4 and the average of the signal value within a fifth time interval t4 - t5 is again comparably small and therefore in between the defined thresholds. The control algorithm may therefore return to its standard settings, for example.

In the example of Figure 3, the different time intervals t0 - t1, t1 - t2, t2 - t3, t3 - t4, and t4 - t5 are of equal lengths. This, however, is only an example. It is generally possible that the different time intervals t0 - t1, t1 - t2, t2 - t3, t3 - t4, and t4 - t5 have different lengths. That is, the average of the signal value within a time interval of a first length may be compared to an average of the signal value within a time interval of a second length, wherein the second length is shorter or longer than the first length. As the automatic control system is generally required to make adjustments to the signal value of the input signal IN in real-time, the time intervals t0 - t1, t1 - t2, t2 - t3, t3 - t4, and t4 - t5 may be comparably short. According to one example, a time interval may be between 1ms (millisecond) and 50ms, for example. Longer or shorter time intervals are generally also possible. Comparably short time intervals, however, may increase the reactivity and accuracy of the automatic control system.

The time intervals t0 - t1, t1 - t2, t2 - t3, t3 - t4, and t4 - t5 in Figure 3 are directly successive time intervals. That is, in this example, a difference between the average value of a signal parameter within a first time interval, and the average value of the signal parameter within a directly preceding second time interval is determined. This, however, is only an example. The two concerned time intervals do not necessarily have to be directly successive time intervals. It is generally possible that a certain time lapses between the first and the second time interval. According to even further examples, the second time interval may even partly overlap with the first time interval. As the automatic control system is generally required to make adjustments to the signal value of the input signal IN in real-time, a time interval between two respective time intervals may be comparably short.

According to one example, the automatic control system has a defined standard reaction time (attack time/release time), which defines how fast the system reacts to changes in the signal parameter. For example, standard attack time may be set to a first value (e.g., 25ms), and standard release time may be set to a second value (e.g. 100ms). These first and second values for the attack and release time are used whenever the difference Δ between the average of the signal value within a first time interval and the average of the signal value within a second time interval is less than a first defined threshold (e.g., a positive threshold) and greater than a second defined threshold (e.g., a negative threshold). When it is detected that the difference Δ between the average of the signal value within a first time interval and the average of the signal value within a second time interval exceeds the first defined threshold or falls below the second defined threshold, attack and release times may be decreased, for example. According to one example, a standard attack time of 25ms may be set to a value of between 10ms and 20ms when Δ is greater than the first defined threshold or less than the second defined threshold, and standard release time of 100ms may be set to a value of between 50ms and 90ms when Δ is greater than the first defined threshold and less than the second defined threshold. That is, according to one example, the greater the difference Δ of the average of the signal value between two time intervals, the shorter the attack and release times. In this way, the attack and release times are adjusted dynamically.

According to one example, when it is detected that the difference Δ between the average of the signal value within a first time interval and the average of the signal value within a second time interval exceeds the first defined threshold or falls below the second defined threshold, the at least one parameter of the control algorithm (e.g., attack and/or release time) is adapted in proportion to the determined difference Δ. In some examples, even more than two thresholds may be considered. If, for example, the difference Δ between the average of the signal value within a first time interval and the average of the signal value within a second time interval exceeds a third defined threshold which is greater than the first defined threshold, or falls below a fourth defined threshold which is lower than the second defined threshold, the at least one parameter of the control algorithm (e.g., attack and/or release time) may be set to a defined maximum or minimum value. The defined maximum or minimum value may be a value for which a deviation from the standard value is the greatest. If, for example, the at least one parameter of the control algorithm is the attack time, the attack time may be set to its fastest possible value if the difference Δ exceeds the third defined threshold, or falls below the fourth defined threshold.

This is exemplarily illustrated in Figure 4. Figure 4 schematically illustrates the determined difference Δ over time. Up until time instant t1, the difference Δ is lower than the first defined threshold (lower positive threshold) and greater than the second defined threshold (higher negative threshold). The respective parameter of the control algorithm (e.g., attack time) therefore is set to a defined value. When at time instant t1 the difference Δ exceeds the first defined threshold (positive delta, if average in first time interval is greater than average in second time interval), the parameter of the control algorithm is adjusted (e.g., attack time decreased). At time instant t2, the difference Δ falls below the first defined threshold again. The parameter of the control algorithm, therefore, could return to its standard value. In the example of Figure 4, however, a delta hysteresis is considered, in order to avoid too many changes in the parameter of the control algorithm within a too short time frame. That is, the system waits until time instant t3, and only resets the parameter of the control algorithm to its standard value once a defined time interval (delta hysteresis) has passed. The difference Δ between time instants t2 and t4 is lower than the first defined threshold (lower positive threshold) and greater than the second defined threshold (higher negative threshold) such that no adjustments to the parameter of the control algorithm are initiated. At time instant t4, the difference Δ falls below the second defined threshold (negative delta, if average in first time interval is lower than average in second time interval). The parameter of the control algorithm, therefore, will be adjusted again.

When, at time instant t5, the difference Δ exceeds the second defined threshold again and returns to values which, in the example of Figure 4, are considered to define a "no change area", the delta hysteresis time has not yet passed. The parameter of the control algorithm only returns to standard settings when the delta hysteresis time has passed at time instant t6. This similarly applies when the difference Δ exceeds the first defined threshold again between time instants t6 and t7.

According to one example, the parameter of the control algorithm is adapted proportionally to the determined difference Δ when the difference Δ is between the first defined threshold and the third defined threshold, or between the second defined threshold and the fourth defined threshold. That is, the greater the difference Δ, the greater the changes of the parameter of the control algorithm. Returning to the example presented above, the attack time may be adapted proportionally to the determined difference Δ for differences Δ between the lower positive threshold and the higher positive threshold, as indicated in Figure 4. For differences Δ exceeding even the higher positive threshold, the attack time may be set to its fastest possible value (e.g., 10ms), for example. This may similarly apply for differences Δ between the higher negative threshold and the lower negative threshold (e.g., attack time adapted proportionally to the determined difference Δ), and differences below the lower negative threshold (e.g., attack time set to its fastest possible value).

The delta hysteresis time as indicated in Figure 4 (time period after an adjustment of control algorithm parameter until another adjustment may be performed), may be set to any suitable value. This may generally depend on the kind of application the automatic control system is used in, and the control algorithm that is used in the automatic control system. Changing attack time and/or release time after detecting that the difference Δ exceeds or falls below a defined threshold is only one of several examples. Generally, any parameter of the control algorithm may be adjusted. Generally, automatic control systems may be implemented in many different ways, and different control algorithms may be used. The principles of the automatic control system described herein equally apply, irrespective of the specific implementation of the control unit 100, 200, and the control algorithm used by the processing unit 112, 212.

The delta detector unit 120 as described above may be part of an automatic control system. That is, the delta detector unit 120 may integrated into an automatic control system. It is, however, generally possible that the delta detector unit 120 is a separate component that is suitably connected to an automatic control system. A delta detector unit 120 according to embodiments of the disclosure is configured to determine an average value of a signal parameter of an input signal IN of an automatic control system within a first time interval, determine an average value of the signal parameter of the input signal IN within a second time interval, determine a difference Δ between the average value of the signal parameter within the first time interval, and the average value of the signal parameter within the second time interval, and, if the determined difference Δ exceeds a defined first threshold or falls below a defined second threshold, instruct the automatic control system to adapt at least one parameter of a control algorithm of the automatic control system.

The signal parameter of the input signal IN may be determined in any suitable way by means of suitable sensors and/or circuits, for example. The kind of sensor or circuit to perform such measurements generally depends on the kind of parameter that is to be determined. However, sensors and circuits for measuring any kind of signal parameter are generally known. An average of a parameter over a defined time interval may generally also be determined with known circuits and systems. Comparing two average values of two time intervals can be done by means of a comparator, for example.

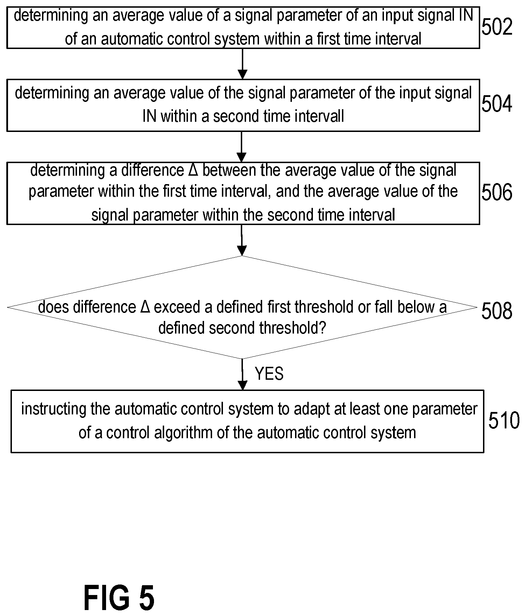

A corresponding method according to embodiments of the disclosure, as exemplarily illustrated in Figure 5, comprises determining an average value of a signal parameter of an input signal IN of an automatic control system within a first time interval (step 502), determining an average value of the signal parameter of the input signal IN within a second time interval (step 504), determining a difference Δ between the average value of the signal parameter within the first time interval, and the average value of the signal parameter within the second time interval (506), and, if the determined difference Δ exceeds a defined first threshold or falls below a defined second threshold (determined in step 508), instructing the automatic control system to adapt at least one parameter of a control algorithm of the automatic control system (step 510).

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should not be understood as excluding the plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and sub-combinations of the various systems and configurations, and other features, functions, and/or properties disclosed. The following claims particularly disclose subject matter from the above description that is regarded to be novel and non-obvious.

## Claims

1. A delta detector unit (120), the delta detector unit (120) being configured to
determine an average value of a signal parameter of an input signal (IN) of an automatic control system within a first time interval,
determine an average value of the signal parameter of the input signal (IN) within a second time interval,
determine a difference (Δ) between the average value of the signal parameter within the first time interval, and the average value of the signal parameter within the second time interval, and
if the determined difference (Δ) exceeds a defined first threshold or falls below a defined second threshold, instruct the automatic control system to adapt at least one parameter of a control algorithm of the automatic control system.

2. The delta detector unit (120) of claim 1, wherein, if the determined difference (Δ) exceeds a defined first threshold or falls below a defined second threshold, the delta detector unit (120) is configured to instruct the automatic control system to adapt at least one parameter of its control algorithm in proportion to the determined difference (Δ).

3. The delta detector unit (120) of claim 2, wherein, if the determined difference (Δ) exceeds a defined third threshold which is greater than the defined first threshold, or falls below a defined fourth threshold which is lower than the defined second threshold, the delta detector unit (120) is configured to instruct the automatic control system to adapt at least one parameter of its control algorithm to a defined maximum or minimum value.

4. The delta detector unit (120) of any of claims 1 to 3, wherein, if the determined difference (Δ) exceeds a defined first threshold or falls below a defined second threshold, the delta detector unit (120) is configured to instruct the automatic control system to adapt at least one of an attack time, and a release time of its control algorithm.

5. The delta detector unit (120) of any of claims 1 to 4, wherein the signal parameter of the input signal (IN) is an amplitude of the input signal (IN).

6. An automatic control system comprising:
the delta detector unit (120) of claim 1; and
a control unit (100, 200), the control unit (100, 200) comprising an adjustment unit (114, 214) configured to adjust a signal parameter of the input signal (IN) depending on a correction signal (COR) to obtain an output signal (OUT), a detector unit (110, 210) configured to determine the respective signal parameter of the input signal (IN) or of the output signal (OUT), and a processing unit (112, 212) configured to carry out a control algorithm, and, by means of the control algorithm and based on a current value of the respective signal parameter of the input signal (IN) or the output signal (OUT), determine the correction signal (COR) such that the respective signal value of the output signal (OUT) matches a desired value or falls within a desired range of values.

7. The automatic control system of claim 6, wherein
the processing unit (112, 212) is configured to set the at least one parameter of the control algorithm to a first standard value if the difference (Δ) is determined to be between the defined first threshold and the defined second threshold, and
the processing unit (112, 212) is configured to set the at least one parameter of the control algorithm to a second value that is different from the first value if the determined difference (Δ) exceeds the defined first threshold or falls below the defined second threshold.

8. The automatic control system of claim 6 or 7, wherein the at least one parameter of the control algorithm adjusted by the processing unit (112, 212) is at least one of an attack time, and a release time.

9. The automatic control system of claim 8, wherein
the processing unit (112, 212) is configured to decrease the attack time and/or the release time of the control algorithm if the determined difference (Δ) exceeds the defined first threshold or falls below the defined second threshold.

10. The automatic control system of any of claims 6 to 9, wherein the automatic control system is an automatic gain control, AGC, system, and the signal parameter of the input signal (IN) adjusted by means of the adjustment unit (114, 214) is an amplitude of the input signal (IN).

11. The automatic control system of any of claims 6 to 10, wherein the processing unit (112, 212) is configured to, after adapting at least one parameter of the control algorithm, let a defined delta hysteresis time pass, before resetting or adapting the at least one parameter of the control algorithm again.

12. A method comprising:
determining an average value of a signal parameter of an input signal (IN) of an automatic control system within a first time interval,
determining an average value of the signal parameter of the input signal (IN) within a second time interval,
determining a difference (Δ) between the average value of the signal parameter within the first time interval, and the average value of the signal parameter within the second time interval, and
if the determined difference (Δ) exceeds a defined first threshold or falls below a defined second threshold, instructing the automatic control system to adapt at least one parameter of a control algorithm of the automatic control system.
